# EUROPEAN PATENT SPECIFICATION

(11) **EP 3 063 044 B1**
(45) Date of publication and mention of the grant of the patent: **24.07.2019**
(21) Application number: 14857411.4
(22) Date of filing: 28.10.2014
(51) Int. Cl.: B60T 8/18

(54) **THREE STAGE DISTRIBUTOR VALVE**
DREISTUFIGES VERTEILERVENTIL
DISTRIBUTEUR À TROIS ÉTAGES

(30) Priority: 30.10.2013 US 201361897579 P
(43) Date of publication of application: 07.09.2016
(73) Proprietor: Wabtec Holding Corp., Wilmerding, PA 15148 (US)
(72) Inventor: SMILESKI, Stojce, 1000 Skopje (MK); HADZI-NUREV, Filip, 1000 Skopje (MK)
(74) Representative: Cohausz & Florack
(86) International application number: PCT/US2014/062566
(87) International publication number: WO 2015/065970

(56) References cited:
- GB-A- 473 898
- GB-A- 2 133 099
- US-A- 2 236 268
- US-A- 3 169 801
- US-A- 3 838 893
- US-A- 3 994 536

## Description

### BACKGROUND OF THE INVENTION

### Field of the Invention

The invention disclosed herein relates generally to a braking system for a railway vehicle and, more particularly, to a three stage distributor valve of a braking system for a railway vehicle.

### Description of Related Art

Conventional distributor valve systems have a dual-mode arrangement with a first brake pressure target for an unloaded railway car and a second brake pressure target for a loaded railway car. Improvements in railway cars have recently led to the development of lighter weight wagons that can accept heavier payloads. Conventional distributor valve systems, however, are not optimized for use with lightweight wagons because they provide a much greater brake pressure than is necessary to provide full braking service. Because a higher braking pressure is applied to the wheels of an unloaded lightweight wagon, the wheels can often lock due to the application of full service braking application. In this locked position, the wheels do not rotate, but rather slide along the rails they rest on. This sliding motion can create flat spots on the wheels of the wagon, thereby creating an imperfect circle. These flat spots can cause the wheels to rotate unevenly and off-balance, causing bumpy and dangerous conditions for the railway vehicle.

In US 3 838 893 A another design of a load compensating valve is disclosed. This load compensating valve continuously adjusts the pressurized air supplied to a brake cylinder. GB 2 133 099 A discloses another design of a brake control system for trains, whereby the braking pressure to be applied at the motor car and the trailer car is divided and depends on the retardation rate of the train. The brake control device adjusts the pressure based on the principle of leverage. Further, in US 3 994 536 A a brake-release accelerating device is disclosed, which operates the opening and closing of an intake valve by an up and down movement of a piston due to a pressure equilibrium or disequilibrium. In US 2 236 268 A a fluid pressure brake for railway vehicles embodying an improved speed control relay valve is disclosed.

### SUMMARY OF THE INVENTION

While various distributor valve systems are known in the railway industry, improved distributor valve systems that include several different brake pressure targets for different wagon weights are desired. Additionally, improved distributor valve systems that provide manual control of the selected brake pressure target are also desired in the railway field. Moreover, the railway industry continues to demand improved distributor valve systems having improved structures and economies of manufacture.

In view of the disadvantages associated with the prior art distributor valve systems, it is desirable to provide an improved distributor valve system that, upon manual selection of a brake pressure target, provides a pre-determined amount of brake pressure to a railway vehicle. Various aspects of a distributor valve system and a method for braking a railway vehicle using a distributor valve system are described in detail herein. In one aspect, a distributor valve system for a railway vehicle may include a brake pipe, a relay valve, an auxiliary reservoir in line between the brake pipe and the relay valve to establish fluid communication between the brake pipe and the relay valve, and a brake cylinder in fluid communication with the relay valve. A change-over device for regulating of the relay valve may have a plurality of positions corresponding to different amounts of pressurized air applied to the brake cylinder, and the relay valve includes a plurality of chambers that correspond to the plurality of positions and are equipped with a closing mechanism allowing or preventing pressurized air to enter the chambers according to a weight of a railway vehicle according to a manually selected position of the change-over device. The relay valve may have three chambers. The distributor valve system may further include a change-over device configured to switch the relay valve between the different positions, wherein the change-over device may be in line between the auxiliary reservoir and the relay valve. The distributor valve system may further include a railway vehicle in fluid communication with the distributor valve system. The distributor valve system may further include a main control valve in fluid communication with the auxiliary reservoir and the relay valve, and a maximum pressure limiter positioned above the main control valve. The distributor valve system may further include an automatic release valve in fluid communication with the brake pipe and a control reservoir, wherein the brake pipe and the control reservoir are in fluid communication. The distributor valve may further include an equalizing valve configured to equalize the auxiliary reservoir air pressure with the control reservoir air pressure, wherein the equalizing valve is in line between the brake pipe and the control reservoir.

According to yet another aspect, a method of braking a railway vehicle using a distributor valve system may include the steps of: (a) providing a distributor valve system on a railway vehicle, as described hereinabove, (b) providing pressurized air from the brake pipe into the auxiliary reservoir, (c) providing pressurized air from the auxiliary reservoir to the relay valve, and (d) selecting a position for the relay valve, wherein the relay valve is configured to include a plurality of different positions corresponding to different amounts of pressurized air that is provided to the brake cylinder, wherein the positions for the relay valve each correspond to a weight of a railway vehicle and wherein the relay valve includes a plurality of chambers that corresponds to the plurality of positions and are filled with the pressurized air according to a weight of a railway vehicle. A further step of the method may include providing pressurized air from the relay valve to the brake cylinder. The relay valve may include three chambers corresponding to the three different positions of the relay valve. The method may further include the step of providing a change-over device configured to switch the relay valve between the different positions, wherein the change-over device is in
line between the auxiliary reservoir and the relay valve. At a first position, the change-over device may direct pressurized air into three chambers of the relay valve. At a second position, the change-over device may direct pressurized air into two chambers of the relay valve. At a third position, the change-over device may direct pressurized air into one chamber of the relay valve. The method may further include the step of limiting the maximum pressure of the distributor valve system by using a maximum pressure limiter, which may be positioned above a main control valve in line between the auxiliary reservoir and the relay valve. The method may further include the step of providing an automatic release valve in fluid communication with the brake pipe and a control reservoir, wherein the brake pipe and the control reservoir may be in fluid communication. The method may further include the step of providing an equalizing valve that provides equalization of the auxiliary reservoir air pressure with the control reservoir air pressure, wherein the equalizing valve may be in line between the brake pipe and the control reservoir.

These and other features and characteristics of the distributor valve system, as well as the method of braking a railway vehicle using the distributor valve system, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and the claims, the singular form of "a", "an", and "the" include plural referents unless the context clearly dictates otherwise.

### BRIEF DESCRIPTION OF THE DRAWINGS

**FIG. 1** is a schematic drawing of a distributor valve system for a railway vehicle in accordance with this disclosure, depicting the pressurized air path from a brake pipe of the railway vehicle to an auxiliary reservoir and a control reservoir.
**FIG. 2** is a schematic drawing of the distributor valve system shown in **FIG. 1****,** depicting the pressurized air path during a brake application to the railway vehicle in a first position.
**FIG. 3** is a schematic drawing of the distributor valve system shown in **FIG. 1****,** depicting the pressurized air path during a brake application to the railway vehicle in a second position.
**FIG. 4** is a schematic drawing of the distributor valve system shown in **FIG. 1****,** depicting the pressurized air path during a brake application to the railway vehicle in a third position.

### DESCRIPTION OF THE DISCLOSURE

For purposes of the description hereinafter, spatial orientation terms, as used, shall relate to the referenced aspect as it is oriented in the accompanying drawings, figures, or otherwise described in the following detailed description. However, it is to be understood that the aspects described hereinafter may assume many alternative variations and configurations. It is also to be understood that the specific components, devices, and features illustrated in the accompanying drawings, figures, and described herein are simply exemplary and should not be considered as limiting.

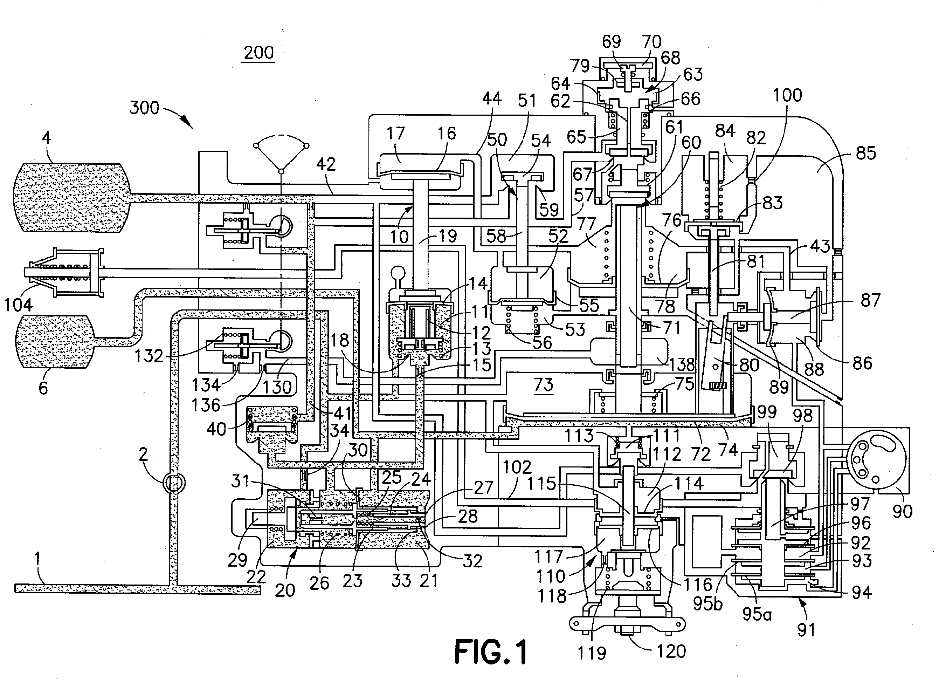

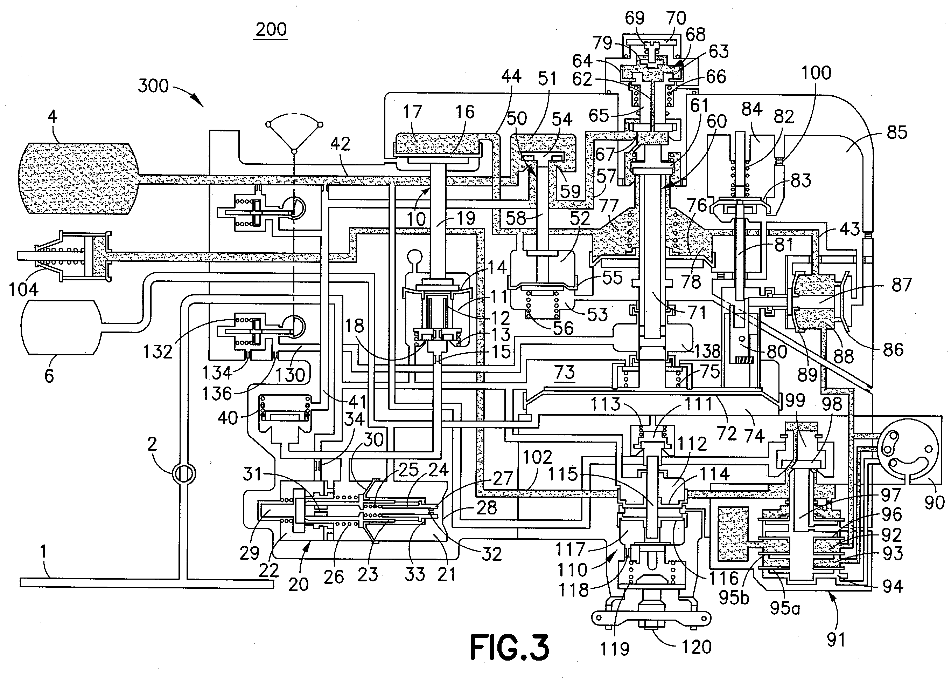

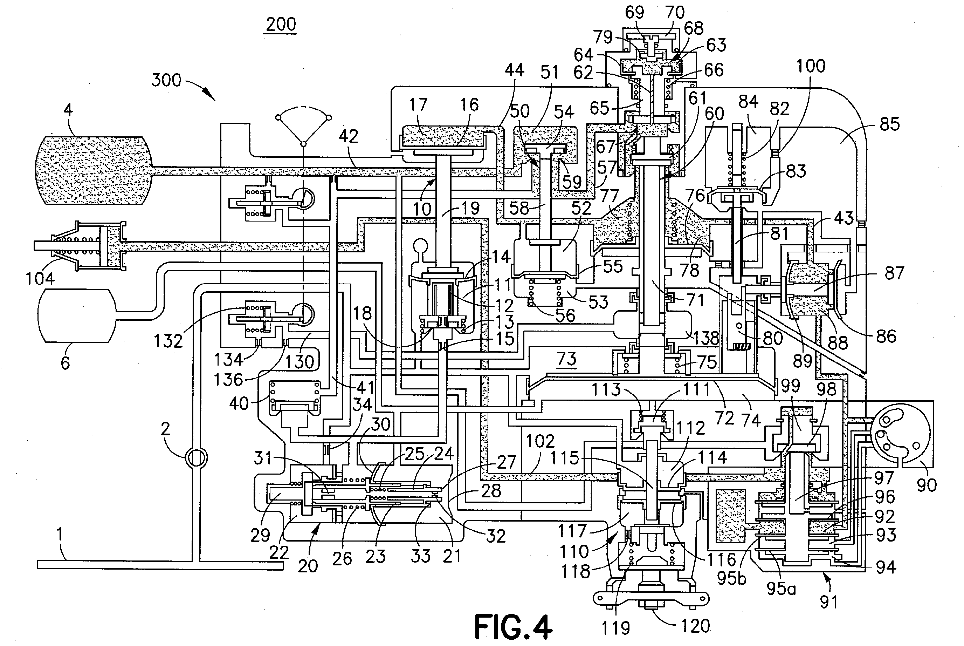

Referring to **FIGS. 1-4****,** a distributor valve system for a railway vehicle, such as a railway wagon, is described herein. The operation of the distributor valve system will be described in greater detail following the description of the system. A railway vehicle **200** is in fluid communication with a distributor valve system **300** via a brake pipe **1.** The brake pipe **1** is fluidly connected to an on-off cock **2.** The brake pipe **1** can be isolated from the railway vehicle **200** by closing the on-off cock **2.** In one aspect, the on-off cock **2** may be included in a bracket on the distributor valve system **300.** This bracket (not shown) may also include connections to an auxiliary reservoir **4,** a control reservoir **6,** and/or a brake cylinder **104.** The brake pipe **1** of the railway vehicle **200** is fluidly connected to an auxiliary reservoir **4** via a sealing valve **10** and a check valve **40.** The auxiliary reservoir **4** is in fluid communication with the check valve **40** via the channel **41.** The sealing valve **10** includes two chambers **11, 17,** a rod **12,** a spring **13,** a valve stem **19,** and two diaphragms **14, 16.** The diaphragm **14** is positioned on an end of the rod **12.** The diaphragm **16** is positioned on an end of the valve stem **19.** Pressurized air from the chamber **17** presses down on the diaphragm **16.** The spring **13** is positioned between the bottom end of the rod **12** and a seat **18.** A choke **15** is positioned in-line between the sealing valve **10** and the check valve **40.** The choke **15** is used to regulate the flow rate of pressurized air that exits from the sealing valve **10,** thereby regulating the filling time of the auxiliary reservoir **4.** The choke **15** may be opened or closed according to the desired flow rate of pressurized air exiting from the sealing valve **10.**

The brake pipe **1** is also fluidly connected to a control reservoir **6** via the sealing valve **10** and an equalizing/filling valve **20.** The equalizing/filling valve **20** includes a first chamber **21** and a second chamber **22,** which are separated by a diaphragm **30.** Each chamber **21, 22** includes a valve **23, 29.** A valve stem **24** is also positioned in the chamber **21.** A first spring **25** is disposed within the valve **23** and valve stem **24.** The spring **25** presses a sliding choke valve **27** against a stop **28.** A second spring **26** is positioned between the diaphragm **30** and the valve **29.** A sensitivity choke **31** is disposed in the chamber **22.** Another choke **32** is positioned on an end of the valve stem **24.**

The auxiliary reservoir **4** is also in fluid communication with an initial admission valve **50** via the channel **42.** The initial admission valve **50** is positioned in line between the auxiliary reservoir **4** and a main control valve **60.** The initial admission valve **50** includes a stem **58** with an inlet valve **54** attached to an upper end of the stem **58.** The inlet valve **54** moves up and down in a chamber **51.** When the inlet valve **54** is pressed down from a top surface, the inlet valve **54** rests on a seat **59.** A bottom portion of the stem **58** rests on a spring **56.** A diaphragm **55** is positioned around the bottom portion of the stem **58** and separates two chambers **52, 53.**

The initial admission valve **50** and the main control valve **60** are in fluid communication via the channel **57.** The main control valve **60** includes an inlet valve **61** and a valve **65,** which has an inner channel **62** for providing pressurized air from the auxiliary reservoir **4** to a chamber **63** above a diaphragm **64.** A spring **66** is disposed between upper and lower edges of the valve **65** so when the force of the spring **66** is overcome, the valve **65** rests against a main control valve seat **67.** A maximum pressure limiter **68** is positioned above the main control valve **60** and includes a pestle **69** and cover **70.** Upon opening the cover **70,** the pestle **69** can be rotated, causing the pestle **69** to move upward or downward depending on the direction of rotation. By rotating the pestle **69,** a pressure plate **79** may be moved up or down, either increasing or decreasing the volume of pressurized air in the chamber **63.**

The main control valve **60** also includes a hollow valve stem **71** that includes a diaphragm **72** attached to an end opposite of the inlet valve **61.** The diaphragm **72** separates two chambers **73, 74.** A spring **75** is disposed on a lower end of the hollow valve stem **71** above the diaphragm **72.** An additional diaphragm **76** is disposed in a chamber **77,** which is positioned at an intermediate position on the hollow valve stem **71.** A spring **78** presses down on the diaphragm **76.**

A rocker lever **80** is positioned in the chamber **73** of the main control valve **60.** The rocker lever **80** is configured to come in contact with an accelerator valve stem **81.** An intermediate portion of the accelerator valve stem **81** has a diaphragm **83** attached thereto with a spring **82** positioned on an upper surface of the diaphragm **83.** The diaphragm **83** separates a chamber **84** from a chamber **85.** An additional diaphragm **86** separates the chamber **85** and an additional chamber **88.** Pressurized air from the chamber **85** moves the diaphragm **86** and a locking member **87** further to the left. The locking member **87** is disposed in the chamber **88** positioned between the two diaphragms **86** and **89.** Pressure on the right side of the diaphragm **89** eventually pushes the locking member **87** against the rocker lever **80.**

The chamber **88** is in fluid communication with a change-over device **90** and a relay valve **91.** The chamber **88** is in line between the main control valve **60** and the relay valve **91.** In one aspect, the change-over device **90** may be manually actuated to switch between different positions. However, additional types of change-over devices are contemplated such as an automatic change-over device or an electronic change-over device. The relay valve **91** includes a plurality of chambers. In one aspect, the relay valve **91** may include three chambers **92, 93, 94.** A lower chamber **94** is separated from a middle chamber **93** by a small diaphragm **95a.** The middle chamber **93** and an upper chamber **92** are separated by another small diaphragm **95b.** A large diaphragm **96** rests on the top surface of the upper chamber **92.** A hollow extension stem **97** extends vertically in the relay valve **91.** The hollow extension stem **97** may include an inlet valve **98** on an upper end of the hollow extension stem **97.** The diaphragms **95, 96** of the relay valve **91** are positioned around the hollow extension stem **97.** Upon pressurized air pushing the diaphragms **95, 96** upward, the inlet valve **98** is lifted by the hollow extension stem **97** into a bore **99** of the relay valve **91.** The relay valve **91** may also be in fluid communication with a brake cylinder **104** of the railway vehicle **200** via a channel **102.**

The distributor valve system **300** may also include an automatic release valve **110** positioned next to the relay valve **91.** The automatic release valve **110** is in fluid communication with the brake pipe **1** and the control reservoir **6** via the chamber **74** in the main control valve **60.** The automatic release valve **110** is configured to enable the brake on an individual railway vehicle to be released manually. When the system is fully charged, the chamber **74** is isolated from the atmosphere by a valve **111.** A chamber **117** is vented to atmosphere via a choke **118,** while a chamber **112** is under pressure from the brake pipe **1.** Two diaphragms **114, 116** separates the two chambers **112, 117.** The two diaphragms **114, 116** are positioned around a hollow valve stem **115.** A spring **119** holds a lever **120** in place on a lower portion of the automatic release valve **110.** The hollow valve stem **115** extends vertically through the automatic release valve **110** and is attached to the lever **120** at a lower portion of the hollow valve stem **115.** A spring **113** also presses down on an upper surface of the valve **111.**

In view of the description of the distributor valve system **300** hereinabove and **FIGS. 1-4****,** a method of operation of the system is described below. In reference to **FIG. 1****,** the operation of the distributor valve system **300** allows for different amounts of pressurized air to be supplied to the brake cylinder **104** depending on the type and weight of the railway vehicle **200.** To effectively supply this pressurized air, the auxiliary reservoir **4** and the control reservoir **6** must be sufficiently filled. Pressurized air flows from the brake pipe **1** to the auxiliary reservoir **4** via the chamber **11** of the sealing valve **10** and the check valve **40.** The flow rate and filling time of the auxiliary reservoir **4** may be regulated by the choke **15.** At the same time that the auxiliary reservoir **4** is filled, the brake pipe **1** directs pressurized air to the control reservoir **6** via the opened sealing valve **10** and the sensitivity choke **31** of the equalizing/filling valve **20.**

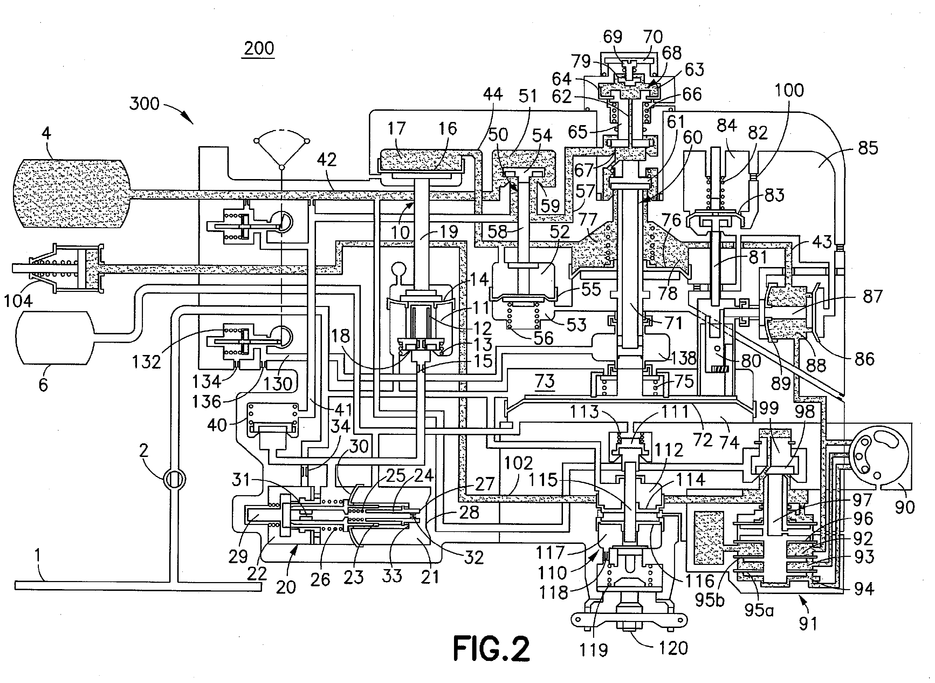

In reference to **FIGS. 2-4****,** after the reservoirs **4, 6** have been sufficiently filled, the brakes can be applied to the railway vehicle **200.** Pressurized air from the auxiliary reservoir **4** is directed into the chamber **51** above the inlet valve **54** of the initial admission valve **50** via the channel **42.** Simultaneously, pressurized air is directed, via the inner channel **62,** into the chamber **63** above the diaphragm **64** of the maximum pressure limiter **68.** As the pressure builds in the chamber **63,** the valve **65** begins to move downward. In one aspect, when the pressure builds to a value between 3.7 bar and 3.9 bar, the biasing force of the spring **66** is overcome and the valve **65** may rest on the seat **67.** It is contemplated that different ranges of pressure can be used to overcome the biasing force of the spring **66** depending on the resiliency of the spring used therein. When the valve **65** rests on the seat **67,** pressurized air can no longer enter the chamber **63** of the maximum pressure limiter **68** via the inner channel **62.** In this way, the chamber **63** above the inlet valve **61** has a constantly regulated pressurization of air. This regulation is done independent of the pressure range that is supplied in the auxiliary reservoir **4.** In this way, the sensitivity of the distributor valve system **300** can be increased at a gradual pace according to the permitted pressure range of the maximum pressure limiter **68.** Additional details of the operation of the maximum pressure limiter **68** are described herein below.

As the brake of the railway vehicle **200** is being applied, the distributor valve system **300** experiences a decrease in brake pipe pressure. The decrease in brake pipe pressure acting on the diaphragm **72** in the chamber **73** results in the main control valve **60** moving upwards. The pressurized air from the control reservoir **6** in the chamber **74** pushes upwards on the diaphragm **72,** thereby assisting in the upward movement of the main control valve **60.** The upward movement of the main control valve **60** immediately brings the rocker lever **80** into contact with the end of the accelerator valve stem **81.** This causes the accelerator valve stem **81** to lift off a seating, thus allowing a rapid escape of brake pipe air to flow from the chamber **73** to the chamber **85.** The flow of brake pipe air striking an under surface of the accelerator valve stem **81** holds the accelerator valve stem **81** open while the pressure in the chamber **85** presses against the diaphragm **86.** This pressure against the diaphragm **86** causes the locking member **87** to push the rocker lever **80** to the left, thereby disengaging the accelerator valve stem **81** from the rocker lever **80.** Additionally, the brake pipe air that is directed into the chamber **85** also flows through the choke **100** into another chamber **84.** Once the pressures in the chambers **84, 85** are approximately equal, the accelerator valve stem **81** can close under the influence of the spring **82.**

The disengagement of the rocker lever **80** from the accelerator valve stem **81** is initially due to the brake pipe air pressure in the chamber **85** acting on the diaphragm **86.** However, this is quickly superseded by the brake cylinder air pressure in the chamber **88** acting on the diaphragm **89.** Thus, during all further regulation of the brake in application or release operation, the accelerator valve stem **81** is held inoperative. After the accelerator valve stem **81** has closed, the brake pipe air pressure in the chambers **84, 85** are vented to atmosphere by chokes. By modifying the bore of the choke **100,** the length of time for when the accelerator valve stem **81** is open can be varied and, consequently, the volume of brake pipe air vented from the distributor valve system **300** can also be varied.

During the application of the railway vehicle's brake, the rapid drop in brake pipe air pressure in the chamber **73** of the main control valve **60** also opens the inlet valve **61** by means of the hollow valve stem **71.** The control reservoir air pressure in the chamber **74** presses upward on the diaphragm **72,** thereby lifting the hollow valve stem **71.** Upon the opening of the inlet valve **61,** pressurized air from the auxiliary reservoir **4** flows through the channel **42,** the inlet valve **54** of the initial admission valve **50,** the channel **57,** and through the inlet valve **61.** This pressurized air is then directed through the channel **43,** the chamber **88** of the locking member **87,** and into the relay valve **91.** Filling of the brake cylinder **104** with pressurized air is then achieved by directing the pressurized air from the relay valve **91** to the brake cylinder **104** via the channel **102.**

The amount of pressurized air directed into the relay valve **91** is regulated by the change-over device **90.** In one aspect, the change-over device **90** is configured to operate at three different positions. An operator of the railway vehicle can manually switch the change-over device **90** between these three positions. Depending on which position is selected, a number of the chambers **92, 93, 94** can be closed off so as not to allow pressurized air to enter therein. In a first position, corresponding to a normal railway vehicle with a load, the relay valve **91** provides a high volume of pressurized air to the brake cylinder **104.** In this first position, the pressurized air from the auxiliary reservoir **4** is directed into three chambers **92, 93, 94** of the relay valve **91.** None of the chambers **92, 93, 94** are closed off in this position. In this position, there is no pressure acting upon the small diaphragm **95,** but instead the pressure acts upon the large diaphragm **96.** The upward pressure on the large diaphragm **96** lifts the inlet valve **98** of the bore **99,** thereby permitting the pressurized air to flow from the relay valve **91** to the brake cylinder **104** via the channel **102.**

In a second position, corresponding to a light weight railway vehicle with a load, the relay valve **91** provides a moderate volume of pressurized air to the brake cylinder **104.** One chamber **94** is closed off via the change-over device **90,** while two chambers **92, 93** are kept open. The pressurized air from the auxiliary reservoir **4** is directed into both of these chambers **92, 93.** The pressurized air acts upon the diaphragms **95, 96,** thereby lifting the inlet valve **98.** The pressurized air then flows from the relay valve **91** to the brake cylinder **104** via the channel **102.**

In a third position, corresponding to a railway vehicle with no load, the relay valve **91** provides a small volume of pressurized air to the brake cylinder **104.** Two chambers **93, 94** are closed and one chamber **92** is left open. The pressurized air from the auxiliary reservoir **4** is directed into this chamber **92.** The pressurized air acts upon the diaphragms **95, 96,** thereby lifting the inlet valve **98.** The pressurized air then flows from the relay valve **91** to the brake cylinder **104** via the channel **102.**

Upon the brake cylinder **104** reaching a predetermined pressure, the pressure acting on the diaphragm **55** causes the inlet valve **54** of the initial admission valve **50** to close. In one aspect, the predetermined pressure to act on the diaphragm **55** of the brake cylinder **104** is 0.70 bar. In order to prevent the premature closing of the inlet valve **61** of the main control valve **60** and the initial admission valve **50** due to the rapid build up of pressure in the relatively small chambers within the distributor valve system **300,** a supply of sustaining air from the chamber **85** is directed momentarily below the diaphragms **76** and **55.** This pressurized air is eventually vented to atmosphere via a choke. Due to the above-mentioned operation, during the initial stage of a brake application an efficient "in-shot" of pressurized air is provided to the brake cylinder **104.** This causes an almost instantaneous rise in pressure, thus causing the brake cylinder piston (not shown), acting through brake rigging (not shown), to move the brake shoes (not shown) rapidly into contact with the railway vehicle's wheels (not shown). After this "in shot" of pressurized air is admitted, the pressurized air can flow from the auxiliary reservoir **4** to the brake cylinder **104** via the relay valve **91.**

In regards to the main control valve **60,** before the hollow valve stem **71** can lift the inlet valve **61** of the main control valve **60** from its seating, the spring **75** must be compressed. Therefore, when the chamber **74** is at a higher pressure than the chamber **73,** the pressurized air presses upward on the diaphragm **72** compressing the springs **75** and **78.** This enhances the control of the low brake cylinder pressure and lifts the inlet valve **61** off its seating.

A reduction in the brake pipe pressure may be sufficient to cause the valve **23** of the equalizing/filling valve **20** to move to the left. In one aspect, a reduction in the brake pipe pressure by 0.08 bar is sufficient to cause this movement. This movement of the valve **23** to the left allows the spring **25** to close the valve **23** against a seat **33.** This closing of the valve **23** restricts fluid communication between the brake pipe **2** and the control reservoir **6** to only the choke **32.** If the brake pipe pressure is reduced even further, the valve **23** may move further to the left, thereby compressing the spring **26** against the valve **29.** In one aspect, this further reduction in brake pipe pressure may be equal to 0.20 bar. As the spring **26** is compressed, the valve **29** is moved off its seating. Thus, the control reservoir **6** is positively isolated from the brake pipe **1,** while simultaneously the auxiliary reservoir **4** is connected to the brake pipe **1** via the check valve **40** and the channel **41.**

Pressurized air that flows from the auxiliary reservoir **4** to the brake cylinder **104,** as described hereinabove, also flows via the channel **57,** the chamber **77,** and the channel **44** into the chamber **17** of the sealing valve **10.** This pressurized air presses down on the diaphragm **16** against the brake pipe pressure acting upwards on the diaphragm **14** in the chamber **11.** When the pressure in the chamber **17** reaches a predetermined amount, the sealing valve **10** closes against its seat **18,** thereby preventing pressurized air from the brake pipe **1** to flow into the auxiliary reservoir **4** via the choke **15.** In one aspect, this predetermined amount of pressure is equal to 0.50 bar.

After the distributor valve system **300** has provided the "in-shot" of pressurized air and the sealing valve **10** and initial admission valve **50** have been closed, the control reservoir **6** and the valve **29** of the equalizing/filling valve **20** are open. This position of the distributor valve system **300** allows pressurized air from the auxiliary reservoir **4** to flow to the brake cylinder **104** via the relay valve **91,** wherein the bore **99** of the relay valve **91** can be adjusted to regulate the brake cylinder filling time.

As the air pressure in the chamber **77** of the main control valve **60** rises, a downward force is exerted on the hollow valve stem **71** via the diaphragm **76.** This downward force, along with the force of the springs **75** and **78,** acts against the upward force created by the pressure differential across the diaphragm **72.** When the downward and upward forces acting on the hollow valve stem **71** are balanced, the hollow valve stem **71** moves downward into a "lap position", thereby allowing the inlet valve **61** to close. Thus, when the main control valve **60** is in this "lap" position, there is neither the admitting nor releasing of air from the brake cylinder **104.** Any further reduction in the brake pipe pressure causes the downward force to decrease, thereby unbalancing the forces on the hollow valve stem **71** and causing the hollow valve stem **71** to move upwards. This upward movement of the hollow valve stem **71** opens the inlet valve **61,** allowing pressurized air from the auxiliary reservoir **4** to flow to the brake cylinder **104** until the increasing pressure in the chamber **77** restores the balance of forces on the hollow valve stem **71.** As the main control valve **60** may be sensitive to small changes in the forces acting on the hollow valve stem **71,** the brake cylinder pressure can be increased by very small increments, thus providing a precise control of the braking. This can continue until a maximum pressure is reached in the brake cylinder **104.** In one aspect, this maximum pressure range may be, for example, 3.7 - 3.9 bar. In the event that pressurized air should leak from the brake cylinder **104,** due to a faulty piston seal or pipe connection, the corresponding fall in air pressure in the chamber **77** will unbalance the forces on the hollow valve stem **71** causing the hollow valve stem **71** to rise and open the inlet valve **61.** As the inlet valve **61** rises, pressurized air from the auxiliary reservoir **4** is admitted to the brake cylinder **104** to compensate for the leakage. Further, pressurized air from the brake pipe **1** can flow to the auxiliary reservoir **4** via the open valve **29** of the equalizing/filling valve **20** and check valve **40,** thus maintaining the safe and effective application of the brake.

The maximum pressure in the distributor valve system **300** is regulated by the maximum pressure limiter **68.** The resiliency of the spring **66** of the maximum pressure limiter **68,** as well as the diameter of the pressure plate **79** screwed on the pestle **69,** are chosen such that the inlet valve **61** is positioned on its seating only when the predetermined maximum pressure in the brake cylinder **104** is achieved. Brake cylinder pressure from the chamber **77** flows through the inner channel **62** into the chamber **63** above the diaphragm **64.** Therefore, the resiliency of the spring **66** and the diameter of the pressure plate **79** screwed onto the pestle **69** can be chosen so as to provide a predetermined amount of resistance before the pressure acting upon the diaphragm **64** causes the diaphragm **64** to move downward, which causes the inlet valve **61** to close against its seat. The adjustment of the maximum brake cylinder pressure may also be done by rotating the pestle **69** after opening the cover **70,** thereby compressing the spring **66** to a certain length.

The distributor valve system **300** also performs several operations during the release of the brake of the railway vehicle **200.** As the pressure in the brake pipe **1** is increased, the increased pressure in the chamber **73** acting on the diaphragm **72** of the hollow valve stem **71** causes the hollow valve stem **71** to move downward from the "lap" position. The top portion of the hollow valve stem **71** can then disengage from the bottom surface of the inlet valve **61,** thereby allowing pressurized air from the brake cylinder **104** to escape to atmosphere. The pressurized air flows from the brake cylinder **104** to the hollow valve stem **71** and a chamber **138.** The pressurized air then flows to chokes **134, 136** of a change-over device **132** via the channel **130.** The bore of each choke **134, 136** can be adjusted to change the vent time of the pressurized air to atmosphere. Thus, by raising the brake pipe pressure incrementally, the brake can be released by very small increments so as to provide the precise control of the braking during release.

If, during brake release of the railway vehicle **200,** the air pressure in the brake pipe **1** should rise above the air pressure in the auxiliary reservoir **4,** pressurized air from the brake pipe 1 will flow through the choke **34** past the valve **29** in the equalizing/filling valve **20,** through the check valve **40** and into the auxiliary reservoir **4.** The valve **29** is held open in this position due to the pressure differential between the auxiliary reservoir **4** and the control reservoir **6** acting on the diaphragm **30** of the equalizing/filling valve **20.** By using this arrangement, the auxiliary reservoir **4** can be recharged during the release of the brake. As the auxiliary reservoir **4** is recharged, the air pressure will begin to equalize with the air pressure in the control reservoir **6.** In this situation, the spring **26** presses the valve **23** to the right, thereby allowing the valve **29** to close.

Upon the brake cylinder pressure being reduced to a certain amount, the brake pipe pressure in the chamber **11** acting on the diaphragm **14** lifts the valve stem **19,** thus opening the sealing valve **10.** In one aspect, when the brake cylinder pressure has been reduced to approximately 0.50 bar, the sealing valve **10** is opened.

The sealing valve **10** may also open under the influence of the spring **13,** provided that the pressure from the brake pipe **1** acting in the chamber **11** does not exceed the air pressure of the auxiliary reservoir **4** in the chamber **17** by about 0.60 bar. However, if the brake is released using a high pressure releasing surge resulting in the brake pipe pressure rising above the normal running pressure, the sealing valve **10** will remain closed by the pressure in the chamber **11,** even though there is no pressure acting against the diaphragm **16.** In one aspect, when the brake pipe pressure rises about 0.60 bar above the normal running pressure of about 5.0 bar, the sealing valve **10** will remain closed. Further recharging of the auxiliary reservoir **4** can continue after the sealing valve **10** opens under action of the spring **13.** This arrangement of the sealing valve **10** and the equalizing/filling valve **20** ensures an effective protection of the auxiliary reservoir **4** and the control reservoir **6** against overcharge during brake release. This enables the high pressure releasing surge to be held for a longer amount of time than is required to effect a complete brake release.

When the brake cylinder pressure falls below a certain pressure, brake pipe pressure in the chamber **73** acting on the locking member **87** overcomes the brake cylinder pressure acting in the chamber **88** on the diaphragm **89,** thereby freeing the rocker lever **80** to return to its normal position and reactivating the accelerator valve stem **81** in the event of re-braking. In one aspect, this operation occurs when the brake cylinder pressure falls below about 0.25 bar. Thus, the accelerator remains inoperative when regulating the brake with low brake cylinder pressures in excess of about 0.25 bar.

During the final stages of brake release and when the brake pipe pressure, in one aspect, has risen to approximately 4.80 bar, the valve **23** moves towards the right and separates from the valve **29,** which closes. The spring **25** presses the sliding choke valve **27** against the stop **28** in the equalizing/filling valve **20.** In this position, communication between the brake pipe **2** and the control reservoir **6** is restricted by the choke **32.** When the pressure differential across the diaphragm **30** is small, the force of the spring **26** is greater than the force of the spring **25** so that the valve **23** moves further towards the right. The valve stem **24** opens and final equalization takes place via the sensitivity choke **31.** Therefore, the equalization of the brake pipe and the control reservoir pressure is completely independent from the brake cylinder pressure so that pressure leakage from the brake cylinder does not influence a complete brake release. This arrangement also protects the control reservoir **6** from a loss in air pressure, even under unusual circumstances. When the control reservoir **6** is charged to a normal running pressure or, in the event of its being overcharged, equalization with the brake pipe pressure is achieved via the sensitivity choke **31** and the valve stem **24.** When the valve stem **24** is closed, the valve stem **24** restricts the loss of air from the control reservoir **6** in the event of a small, slow decrease in the brake pipe pressure. This can occur with a train requiring only a very light and brief brake application. When the valve stem **24** is closed, it can also retard the equalization of the control reservoir pressure with the brake pipe pressure during the brake release.

Operation and use of the automatic release valve **110** is described hereinafter. The automatic release valve **110** is located in a lower portion of the distributor valve system **300** and is used to manually release a brake on an individual railway vehicle **200.** When the brake system is charged, pressurized air from the control reservoir **6** flows into the chamber **74.** This pressurized air is isolated from the atmosphere by the valve **111.** Pressurized air in the chamber **117** is vented to atmosphere via the choke **118** when the chamber **112** is under pressure from the brake pipe air. This brake pipe air acts on the diaphragm **114** to press the hollow valve stem **115** downwards. The spring **119** holds the lever **120** of the automatic release valve **110.**

The automatic release valve **110** operates in several different methods. In a first operation, the automatic release valve **110** is used to release air pressure when the control reservoir **6** becomes overcharged. In order to release excess pressure in the control reservoir **6,** a single short manual operation of the lever **120** lifts the hollow valve stem **115,** thereby opening the valve **111.** This allows air from the chamber **74** and the control reservoir **6** to flow down the hollow valve stem **115** and into the chamber **117.** The air is directed to atmosphere from the chamber **117** via the choke **118.** This quick build up of air pressure in the chamber **117** acts on the bottom surface of the diaphragm **116,** which has a larger effective area than the diaphragm **114,** which is subject to brake pipe pressure in the chamber **112.** Thus, the pressure in the chamber **117** holds the valve **111** open until it has fallen to a value below that of the pressure in the chamber **112.** At this point in time, the hollow stem valve **115** moves down and the spring **113** closes the valve **111.** Using this operation, the control reservoir overcharge is released automatically and with minimal loss of pressurized air in the shortest amount of time.

In a second operation, the automatic release valve **110** is used for a complete brake pressure release. With the brake pipe **1** at about or exactly at 0.00 bar pressure and the brake fully applied, one short quick manual operation of the lever **120** is performed. With the brake pipe **1** being at atmospheric pressure and not providing pressure against the diaphragm **114,** the valve **111** is held open due to the upward pressure on the diaphragm **116,** until the chamber **117** is at atmospheric pressure as well. Because the brake pipe **1** is not providing pressure to the chamber **112,** the pressure from the chamber **74** and the control reservoir **6** is directed into the chamber **117** and vented to atmosphere via the choke **118.** By performing this function, the pressure from the control reservoir **6** is completely released to atmosphere until it is also at atmospheric pressure. The brake, therefore, is fully released as a consequence.

In a third operation, the automatic release valve **110** is operated by vacuum. This feature enables the automatic release valve **110** on the railway vehicle **200** to be operated remotely, quite often from a locomotive. This locomotive (not shown) must be suitably equipped with an apparatus (not shown) for enabling a vacuum to be created in the brake pipe. When the vacuum is created in the chamber **112** of the automatic release valve **110,** atmospheric pressure acting on the underside of the diaphragm **116** causes the hollow valve stem **115** to lift, thereby opening the valve **111.** Thereinafter, the automatic release valve **110** operates similarly to the above mentioned operations for an overcharged control reservoir **6** or a complete brake release.

## Claims

1. A distributor valve system (300) for a railway vehicle (200), comprising:
a brake pipe (1);
a relay valve (91);
an auxiliary reservoir (4) in line between the brake pipe (1) and the relay valve (91) to establish fluid communication between the brake pipe (1) and the relay valve (91); and
a brake cylinder (104) in fluid communication with the relay valve (91),
**characterized in that**:
a change-over device (90) for regulating of the relay valve (91) has a plurality of positions corresponding to different amounts of pressurized air applied to the brake cylinder (104), and
the relay valve (91) includes a plurality of chambers (92, 93, 94) that correspond to the plurality of positions and are equipped with a closing mechanism allowing or preventing pressurized air to enter the chambers according to a weight of a railway vehicle (200) according to a manually selected position of the change-over device (90).

2. The distributor valve system as claimed in claim 1, wherein the relay valve (91) has three chambers (92, 93, 94).

3. The distributor valve system as claimed in claim 1, further comprising a change-over device (90) configured to switch the relay valve (91) between the different positions, wherein the change-over device (90) is in line between the auxiliary reservoir (4) and the relay valve (91).

4. The distributor valve system as claimed in claim 3, wherein the railway vehicle (200) is in fluid communication with the distributor valve system (300) via the brake pipe (1).

5. The distributor valve system as claimed in claim 4, further comprising: a main control valve (60) in line between the auxiliary reservoir (4) and the relay valve (91); and
a maximum pressure limiter (68) positioned above the main control valve (60).

6. The distributor valve system as claimed in claim 5, further comprising an automatic release valve (110) in fluid communication with the brake pipe (1) and a control reservoir (6), wherein the automatic release valve (110) is in line between the brake pipe (1) and the control reservoir (6).

7. The distributor valve system as claimed in claim 6, further comprising an equalizing valve (20) configured to equalize the auxiliary reservoir air pressure with the control reservoir air pressure, wherein the equalizing valve (20) is in fluid communication with the brake pipe (1), the control reservoir (6), and the auxiliary reservoir (4).

8. A method of braking a railway vehicle (200) using a distributor valve system (300), comprising the steps of:
a. providing a distributor valve system (300) on a railway vehicle (200), the distributor valve system (300) comprising:
a brake pipe (1);
a relay valve (91);
an auxiliary reservoir (4) in line between the brake pipe (1) and the relay valve (91) to establish fluid communication between the brake pipe (1)_and the relay valve (91); and
a brake cylinder (104) in fluid communication with the relay valve (91), wherein, the relay valve (91) has a plurality of positions corresponding to different amounts of air pressure applied to the brake cylinder (104), and
the railway vehicle (200) is in fluid communication with the distributor valve system (300) via the brake pipe (1);
b. directing pressurized air from the brake pipe (1) into the auxiliary reservoir (4);
c. directing pressurized air from the auxiliary reservoir (4) to the relay valve (91); and
d. selecting a position for the relay valve (91), wherein the relay valve (91) is configured to include a plurality of different positions corresponding to different amounts of pressurized air that are provided to the brake cylinder (104)
**characterized in that**:
the positions for the relay valve (91) each correspond to a weight of a railway vehicle (200); and
the relay valve (91) includes a plurality of chambers (92, 93, 94) that corresponds to the plurality of positions and are filled with the pressurized air according to a weight of a railway vehicle 200.

9. The method of braking a railway vehicle as claimed in claim 8, further comprising the step of directing the selected amount of pressurized air from the relay valve (91) to the brake cylinder (104).

10. The method of braking a railway vehicle as claimed in claim 8, wherein the relay valve (91) includes three chambers (92, 93, 94) corresponding to the three different positions of the relay valve (91).

11. The method of braking a railway vehicle as claimed in claim 8, further comprising the step of providing a change-over device (90) configured to switch the relay valve (91) between the different positions, wherein the change-over device (90) is in line between the auxiliary reservoir (4)_and the relay valve (91).

12. The method of braking a railway vehicle as claimed in claim 11, wherein, at a first position, the change-over device (90) directs pressurized air into three chambers (92, 93, 94) of the relay valve (91); at a second position, the change-over device (90) directs pressurized air into two chambers (92, 93, 94) of the relay valve (91); and, at a third position, the change-over device (90) directs pressurized air into one chamber (92, 93, 94) of the relay valve (91).

13. The method of braking a railway vehicle as claimed in claim 8, further comprising the step of limiting the maximum pressure of the distributor valve system (300) by using a maximum pressure limiter (68), which is positioned above a main control valve (60) in line between the auxiliary reservoir (4) and the relay valve (91).

14. The method of braking a railway vehicle as claimed in claim 8, further comprising the step of providing an automatic release valve (110) in fluid communication with the brake pipe (1) and a control reservoir (6), wherein the automatic release valve (110) is in line between the brake pipe (1) and the control reservoir (6).

15. The method of braking a railway vehicle as claimed in claim 8, further comprising the step of providing a control reservoir (6) and providing an equalizing valve (20) that provides equalization of the auxiliary reservoir air pressure with the control reservoir air pressure, wherein the equalizing valve (20) is in fluid communication with the brake pipe (1), the control reservoir (6), and the auxiliary reservoir (4).

## Patentansprüche

1. Verteilerventilsystem (300) für ein Schienenfahrzeug (200), umfassend:
eine Bremsleitung (1);
ein Relaisventil (91);
einen Hilfsbehälter (4), angeschlossen zwischen der Bremsleitung (1) und dem Relaisventil (91), um eine Fluidverbindung zwischen der Bremsleitung (1) und dem Relaisventil (91) herzustellen; und
einen Bremszylinder (104) in Fluidverbindung mit dem Relaisventil (91),
**dadurch gekennzeichnet, dass**:
eine Umschaltvorrichtung (90) zum Regeln des Relaisventils (91) mehrere Stellungen aufweist, die unterschiedlichen Mengen an Druckluft, die auf den Bremszylinder (104) beaufschlagt werden, entsprechen, und
das Relaisventil (91) mehrere Kammern (92, 93, 94) beinhaltet, die den mehreren Stellungen entsprechen und mit einem Schließmechanismus ausgestattet sind, der ein Eintreten von Druckluft in die Kammern gemäß einem Gewicht eines Schienenfahrzeugs (200) gemäß einer manuell ausgewählten Stellung der Umschalteinrichtung (90) ermöglicht oder verhindert.

2. Verteilerventilsystem nach Anspruch 1, wobei das Relaisventil (91) drei Kammern (92, 93, 94) aufweist.

3. Verteilerventilsystem nach Anspruch 1, ferner umfassend eine Umschaltvorrichtung (90), die dafür ausgelegt ist, das Relaisventil (91) zwischen den unterschiedlichen Stellungen umzuschalten, wobei die Umschaltvorrichtung (90) zwischen dem Hilfsbehälter (4) und dem Relaisventil (91) angeschlossen ist.

4. Verteilerventilsystem nach Anspruch 3, wobei das Schienenfahrzeug (200) über die Bremsleitung (1) in Fluidverbindung mit dem Verteilerventilsystem (300) steht.

5. Verteilerventilsystem nach Anspruch 4, ferner umfassend:
ein Hauptsteuerventil (60), das zwischen dem Hilfsbehälter (4) und dem Relaisventil (91) angeschlossen ist; und
einen Maximaldruckbegrenzer (68), der über dem Hauptsteuerventil (60) angeordnet ist.

6. Verteilerventilsystem nach Anspruch 5, ferner umfassend ein automatisches Ablassventil (110) in Fluidverbindung mit der Bremsleitung (1) und einem Steuerbehälter (6), wobei das automatische Ablassventil (110) zwischen der Bremsleitung (1) und dem Steuerbehälter (6) angeschlossen ist.

7. Verteilerventilsystem nach Anspruch 6, ferner umfassend ein Ausgleichsventil (20), das dafür ausgelegt ist, den Hilfsbehälter-Luftdruck mit dem Steuerbehälter-Luftdruck auszugleichen, wobei das Ausgleichsventil (20) in Fluidverbindung mit der Bremsleitung (1), dem Steuerbehälter (6) und dem Hilfsbehälter (4) ist.

8. Verfahren zum Abbremsen eines Schienenfahrzeugs (200) unter Verwendung von einem Verteilerventilsystem (300), umfassend die Schritte:
a. Bereitstellen eines Verteilerventilsystems (300) an einem Schienenfahrzeug (200), wobei das Verteilerventilsystem (300) Folgendes umfasst:
eine Bremsleitung (1);
ein Relaisventil (91);
einen Hilfsbehälter (4), der zwischen der Bremsleitung (1) und dem Relaisventil (91) angeschlossen ist, um eine Fluidverbindung zwischen der Bremsleitung (1) und dem Relaisventil (91) herzustellen; und
einen Bremszylinder (104) in Fluidverbindung mit dem Relaisventil (91), wobei das Relaisventil (91) mehrere Stellungen aufweist, die mehreren unterschiedlichen Luftdruckmengen entsprechen, die auf den Bremszylinder (104) ausgeübt werden, und wobei das Schienenfahrzeug (200) über die Bremsleitung (1) in Fluidverbindung mit dem Verteilerventilsystem (300) steht;
b. Leiten von Druckluft aus der Bremsleitung (1) in den Hilfsbehälter (4);
c. Leiten von Druckluft aus dem Hilfsbehälter (4) zu dem Relaisventil (91); und
d. Auswählen einer Stellung für das Relaisventil (91), wobei das Relaisventil (91) dafür ausgelegt ist, mehrere unterschiedliche Stellungen zu umfassen, die unterschiedlichen Mengen an Druckluft entsprechen, die dem Bremszylinder (104) zugeführt werden,
**dadurch gekennzeichnet, dass**:
die Stellungen für das Relaisventil (91) jeweils einem Gewicht eines Schienenfahrzeugs (200) entsprechen; und
das Relaisventil (91) mehrere Kammern (92,93,94) beinhaltet, die den mehreren Stellungen entsprechen und gemäß einem Gewicht eines Schienenfahrzeugs (200) mit Druckluft gefüllt sind.

9. Verfahren zum Abbremsen eines Schienenfahrzeugs nach Anspruch 8, ferner umfassend den Schritt des Leitens der ausgewählten Menge Druckluft von dem Relaisventil (91) zu dem Bremszylinder (104).

10. Verfahren zum Abbremsen eines Schienenfahrzeugs nach Anspruch 8, wobei das Relaisventil (91) drei Kammern (92,93, 94) beinhaltet, die den drei unterschiedlichen Stellungen des Relaisventils (91) entsprechen.

11. Verfahren zum Abbremsen eines Schienenfahrzeugs nach Anspruch 8, ferner umfassend den Schritt des Bereitstellens einer Umschaltvorrichtung (90), die dafür ausgelegt ist, das Relaisventil (91) zwischen den unterschiedlichen Stellungen umzuschalten, wobei die Umschalteinrichtung (90) zwischen dem Hilfsbehälter (4) und dem Relaisventil (91) angeschlossen ist.

12. Verfahren zum Abbremsen eines Schienenfahrzeugs nach Anspruch 11, wobei die Umschaltvorrichtung (90) in einer ersten Stellung Druckluft in drei Kammern (92, 93, 94) des Relaisventils (91) leitet; die Umschaltvorrichtung (90) in einer zweiten Stellung Druckluft in zwei Kammern (92, 93, 94) des Relaisventils (91) leitet; und die Umschaltvorrichtung (90) in einer dritten Stellung Druckluft in eine Kammer (92, 93, 94) des Relaisventils (91) leitet.

13. Verfahren zum Abbremsen eines Schienenfahrzeugs nach Anspruch 8, ferner umfassend den Schritt des Begrenzens des Maximaldrucks des Verteilerventilsystems (300) unter Verwendung eines Maximaldruckbegrenzers (68), der über einem Hauptsteuerventil (60), das zwischen dem Hilfsbehälter (4) und dem Verteilerventil (91) angeschlossen ist, angeordnet ist.

14. Verfahren zum Abbremsen eines Schienenfahrzeugs nach Anspruch 8, ferner umfassend den Schritt des Bereitstellens eines automatischen Ablassventils (110) in Fluidverbindung mit der Bremsleitung (1) und einem Steuerbehälter (6), wobei das automatische Ablassventil (110) zwischen der Bremsleitung (1) und dem Steuerbehälter (6) angeschlossen ist.

15. Verfahren zum Abbremsen eines Schienenfahrzeugs nach Anspruch 8, ferner umfassend den Schritt des Bereitstellens eines Steuerbehälters (6) und Bereitstellens eines Ausgleichsventils (20), das den Ausgleich des Hilfsbehälter-Luftdrucks mit dem Steuerbehälter-Luftdruck ermöglicht, wobei das Ausgleichsventil (20) in Fluidverbindung mit der Bremsleitung (1), dem Steuerbehälter (6) und dem Hilfsbehälter (4) ist.

## Revendications

1. Système distributeur (300) pour un véhicule ferroviaire (200), ledit système comprenant :
une conduite de frein (1) ;
une valve relais (91) ;
un réservoir auxiliaire (4) disposé en ligne entre la conduite de frein (1) et la valve relais (91), pour établir une communication fluidique entre la conduite de frein (1) et la valve relais (91) ; et
un cylindre de frein (104) en communication fluidique avec la valve relais (91),
**caractérisé en ce**
**qu'**un dispositif inverseur (90) destiné à réguler la valve relais (91) a une pluralité de positions correspondant à différentes quantités d'air pressurisé, qui sont fournies au cylindre de frein (104), et
en ce que la valve relais (91) comprend une pluralité de chambres (92, 93, 94) qui correspond à la pluralité de positions, lesdites chambres étant équipées d'un mécanisme de fermeture permettant à de l'air pressurisé, ou empêchant celui-ci, d'entrer dans les chambres conformément à un poids d'un véhicule ferroviaire (200) et selon une position du dispositif inverseur (90), ladite position ayant été sélectionnée manuellement.

2. Système distributeur selon la revendication 1, dans lequel la valve relais (91) a trois chambres (92, 93, 94).

3. Système distributeur selon la revendication 1, comprenant en outre un dispositif inverseur (90) configuré pour faire passer la valve relais (91) par les différentes positions, système distributeur dans lequel le dispositif inverseur (90) est disposé en ligne entre le réservoir auxiliaire (4) et la valve relais (91).

4. Système distributeur selon la revendication 3, dans lequel le véhicule ferroviaire (200) est en communication fluidique avec le système distributeur (300) via la conduite de frein (1).

5. Système distributeur selon la revendication 4, comprenant en outre :
une valve de commande principale (60) disposée en ligne entre le réservoir auxiliaire (4) et la valve relais (91) ; et
un limiteur de pression maximale (68) positionné au dessus de la valve de commande principale (60).

6. Système distributeur selon la revendication 5, comprenant en outre une valve de desserrage automatique (110) en communication fluidique avec la conduite de frein (1) et avec un réservoir de commande (6), système distributeur dans lequel la valve de desserrage automatique (110) est disposée en ligne entre la conduite de frein (1) et le réservoir de commande (6).

7. Système distributeur selon la revendication 6, comprenant en outre une valve égalisatrice (20) configurée pour égaliser la pression d'air du réservoir auxiliaire, avec la pression d'air du réservoir de commande, système distributeur dans lequel la valve égalisatrice (20) est en communication fluidique avec la conduite de frein (1), avec le réservoir de commande (6) et avec le réservoir auxiliaire (4).

8. Procédé de freinage d'un véhicule ferroviaire (200) utilisant un système distributeur (300), ledit procédé comprenant les étapes consistant :
a. à fournir un système distributeur (300) sur un véhicule ferroviaire (200), le système distributeur (300) comprenant :
une conduite de frein (1) ;
une valve relais (91) ;
un réservoir auxiliaire (4) disposé en ligne entre la conduite de frein (1) et la valve relais (91), pour établir une communication fluidique entre la conduite de frein (1) et la valve relais (91) ; et
un cylindre de frein (104) en communication fluidique avec la valve relais (91),
système distributeur dans lequel la valve relais (91) a une pluralité de positions correspondant à différentes quantités de pression d'air, qui sont fournies au cylindre de frein (104), et le véhicule ferroviaire (200) est en communication fluidique avec le système distributeur (300) via la conduite de frein (1) ;
b. à diriger de l'air pressurisé provenant de la conduite de frein (1), à l'intérieur du réservoir auxiliaire (4) ;
c. à diriger de l'air pressurisé, depuis le réservoir auxiliaire (4) jusqu'à la valve relais (91) ;
et
d. à sélectionner une position pour la valve relais (91), où la valve relais (91) est configurée pour comprendre une pluralité de positions différentes correspondant à différentes quantités d'air pressurisé qui sont fournies au cylindre de frein (104),
**caractérisé en ce que**
les positions pour la valve relais (91) correspondent chacune à un poids d'un véhicule ferroviaire (200) ; et
**en ce que** la valve relais (91) comprend une pluralité de chambres (92, 93, 94), qui correspond à la pluralité de positions, lesdites chambres étant remplies avec de l'air pressurisé conformément à un poids d'un véhicule ferroviaire (200).

9. Procédé de freinage d'un véhicule ferroviaire selon la revendication 8, ledit procédé comprenant en outre l'étape consistant à diriger la quantité sélectionnée d'air pressurisé, depuis la valve relais (91) jusqu'au cylindre de frein (104).

10. Procédé de freinage d'un véhicule ferroviaire selon la revendication 8, dans lequel la valve relais (91) comprend trois chambres (92, 93, 94) correspondant aux trois positions différentes de la valve relais (91).

11. Procédé de freinage d'un véhicule ferroviaire selon la revendication 8, ledit procédé comprenant en outre l'étape consistant à fournir un dispositif inverseur (90) configuré pour faire passer la valve relais (91) par les différentes positions, où le dispositif inverseur (90) est disposé en ligne entre le réservoir auxiliaire (4) et la valve relais (91).

12. Procédé de freinage d'un véhicule ferroviaire selon la revendication 11, dans lequel, sur une première position, le dispositif inverseur (90) dirige de l'air pressurisé à l'intérieur de trois chambres (92, 93, 94) de la valve relais (91) ; sur une deuxième position, le dispositif inverseur (90) dirige de l'air pressurisé à l'intérieur de deux chambres (92, 93, 94) de la valve relais (91) ; et, sur une troisième position, le dispositif inverseur (90) dirige de l'air pressurisé à l'intérieur d'une chambre (92, 93, 94) de la valve relais (91).

13. Procédé de freinage d'un véhicule ferroviaire selon la revendication 8, ledit procédé comprenant en outre l'étape consistant à limiter la pression maximale du système distributeur (300), en utilisant un limiteur de pression maximale (68), limiteur qui est positionné au-dessus d'une valve de commande principale (60) disposée en ligne entre le réservoir auxiliaire (4) et la valve relais (91).

14. Procédé de freinage d'un véhicule ferroviaire selon la revendication 8, ledit procédé comprenant en outre l'étape consistant à fournir une valve de desserrage automatique (110) en communication fluidique avec la conduite de frein (1) et avec un réservoir de commande (6), où la valve de desserrage automatique (110) est disposée en ligne entre la conduite de frein (1) et le réservoir de commande (6).

15. Procédé de freinage d'un véhicule ferroviaire selon la revendication 8, ledit procédé comprenant en outre l'étape consistant :
à fournir un réservoir de commande (6) et à fournir une valve égalisatrice (20) qui permet d'égaliser la pression d'air du réservoir auxiliaire, avec la pression d'air du réservoir de commande, où la valve égalisatrice (20) est en communication fluidique avec la conduite de frein (1), avec le réservoir de commande (6) et avec le réservoir auxiliaire (4).
